# EUROPEAN PATENT APPLICATION

(11) **EP 2 431 576 A1**
(43) Date of publication of application: **21.03.2012**
(21) Application number: 10774778.4
(22) Date of filing: 19.03.2010
(51) Int. Cl.: F01D 25/00, F01D 5/20, F01D 5/22

(54) **METHOD AND APPARATUS FOR SIMULATION TEST OF CENTRIFUGAL STRESS OF TURBINE BLADE**

(30) Priority: 12.05.2009 JP 2009115822
(71) Applicant: Mitsubishi Heavy Industries, Ltd., Tokyo 108-8215 (JP)
(72) Inventor: TANAKA, Takeshi, Takasago-shi Hyogo 676-8686 (JP); ASAKA, Haruhiko, Takasago-shi Hyogo 676-8686 (JP); MICHINISHI, Junya, Takasago-shi Hyogo 676-8686 (JP); MIYAJIMA, Keiichiro, Tokyo 108-8215 (JP); MORI, Kazushi, Takasago-shi Hyogo 676-8686 (JP)
(74) Representative: Intès, Didier Gérard André
(86) International application number: PCT/JP2010/054801
(87) International publication number: WO 2010/131519

(57) **Abstract**

The object is to provide a method and device to detect internal defect in the weld overlaid portion of erosion resistant material in the border portion between the blade profile and the shroud of a turbine blade with high accuracy by a static test method for an individual turbine blade
applying a resultant pressing force, corresponding to centrifugal force and
untwisting force of the turbine blade 10 in operation of the turbine, to the shroud 12 with installing the blade root 18 of the turbine blade 10 to the blade root retainer 20 and applying a force in the direction of centrifugal force on the blade root 18 from outside of the blade root retainer 20 to eliminate backlash between the blade root 18 and blade root retainer 20, retaining securely the shroud 12 on the side opposite to the portion which is applied the pressing force, and
implementing simulated test of centrifugal stress in the weld-overlaid portion by applying the resultant pressing force, corresponding to centrifugal force and untwisting force of the turbine blade 10 in operation of the turbine, to the shroud 12.

## Description

### Technical Field

The present invention relates to a method and device for implementing simulated test of centrifugal stress in a turbine blade, specifically to a method and device for implementing efficiently by a simple method simulated test of the centrifugal stress created at a weld overlaid portion on the shroud which is formed on the tip of the turbine blade profile part for the purpose of preventing vibration of the turbine blade.

### Related Art

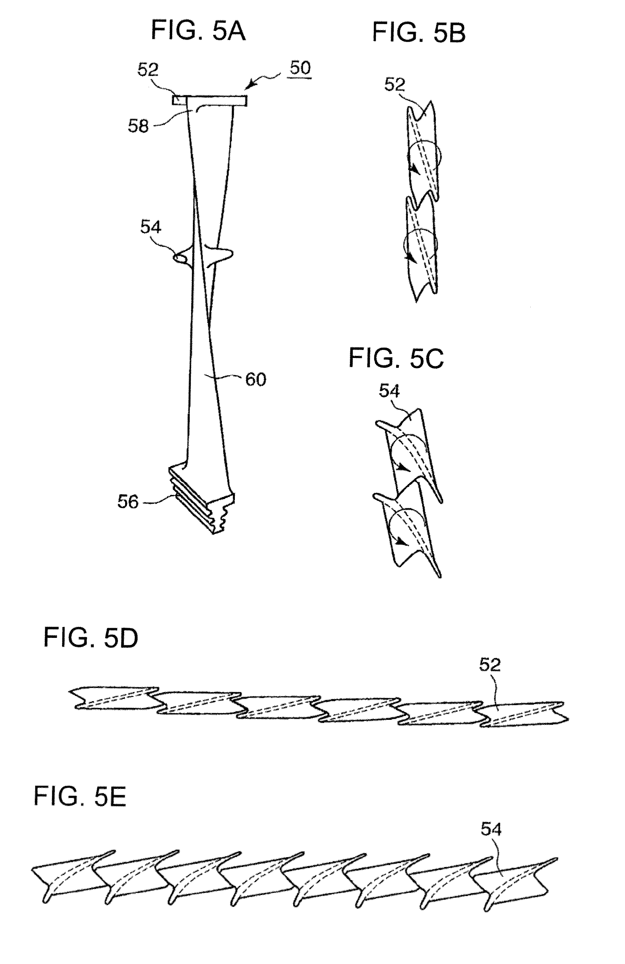

As a turbine blade of a steam turbine for electric power generation is adopted a long-length blade longer than 40 in. as shown in FIGS.5A-E in order to correspond to increased output requirement of a thermal power plant, FIG.5A is a perspective view of an example of long-length turbine blade, FIG.5B and FIG.5C is respectively an illustration showing a state that all of shrouds 52 and stubs 54 of adjacent blades 50 are circumferentially brought into contact each other to form a kind of blade group connected in a ring shape in operation by the untwist moments acting to the blades as shown by arrows. FIG.5D and FIG.5E is respectively an illustration showing a state that all the blades of a turbine rotor are brought into contact at the shrouds 52 and stubs 54 thereof by the untwist moments in operation.

As shown in FIG.5A, the long-length blade 50 of a steam turbine is formed to have the shroud 52 and the stub 54 at the tip portion and the longitudinal middle portion of the turbine blade 50 respectively in order to suppress the vibration. In operation of each of the turbine blades 50 installed around the rotor, each of the tip portion (shrouds 52) is subjected to untwist moment indicated by the arrows in FIG.5B and the vicinity of each of the longitudinal intermediate part (vicinity of the stubs 54) is subjected to untwist moment indicated by the arrows in FIG.5C.

Turbine blades 50 are untwisted in operation in the directions shown in FIGS.5B and 5C by arrows, so that shrouds 52 and stubs 54 of adjacent blades of all of the blades of a turbine rotor come into contact with each other to form a kind of blade group connected in a kind of blade group connected in ring shape as shown in FIGS.5D and 5E. Vibration of the blades can be damped by the frictional force between the contact faces of adjacent shrouds 52 and stubs 54 of all of the blades 50 around the rotor.

The circumferential velocity of the shroud of a long-length blade of over 40 in. becomes near Mach 2 or larger than Mach 2 when the turbine rotor is rotated at 3600 rpm. As the turbine rotor is driven by steam, fine particles of water impinge on the turbine blades 50 and erosion may occur on the surface thereof. The erosion develops hardly on a hard surface. Therefore, weld overlaying of stellite(registered trade mark of Deloro Stellite Holdings Co.) which is superior in erosion resistance is performed usually on a portion where resistance to erosion, which depends on the shape of the turbine blade 50 and circumferential velocity of the portion, is low at a portion such as, for example, the border portion 58 between the shroud 52 and blade profile part 60 as shown in FIG.5A.

Internal defects tend to occur in the weld overlay. Stellite is high in erosion resistance but low in toughness. Therefore, when centrifugal stress exerts on the weld overlaid stellite layer having internal defects, cracks may develop from the defects to the surface. When circumferential velocity of the shroud 52 reaches Mach 2 or over as mentioned above, centrifugal force exerting on the shroud 52 becomes 5t or over depending on the mass of the shroud 52. When such a centrifugal stress exerts on the weld overlaid portion 58, cracks develop easily from defects in the weld overlay and advances to reach the surface of the weld overlaid portion 58, for hard material such as satellite is lower in toughness and rather brittle.

To cope with the problem caused by the internal defects in the weld overlay when centrifugal stress exerts on thereon, a HSB test(High Speed Balance test) is performed using a test device for the steam turbine to confirm soundness of a whole rotor. In the test, actual turbine blades 50 as shown in FIG.5A are attached to a turbine rotor, and the turbine rotor is rotated at a 115% over speed of rated speed or corresponding speed by means of an electric motor so that centrifugal stress exerts on the blades. After the test, the weld overlaid portion is inspected by an ultrasonic test equipment or so on.

However, the diameter of the turbine rotor attached with the moving blades is near three times the length of the moving blade and large space is needed for HSB test. In addition, a large vacuum room is needed for accommodating the HSB test equipment because it is necessary by vacuumizing the test room to reduce air resistance generated when rotating the rotor with blades at the high rotation speed. Therefore, a vacuum pump of large capacity is needed to vacuumize the large room and also time is needed to vacuumize the room, which raise the cost of testing. Furthermore, the HSB test as mentioned above is performed near the last of the manufacturing process before shipping. Therefore, if a defect is found in a turbine blade 50 by the HSB test, the turbine blade 50 must be repaired and the turbine rotor must be installed again on the test equipment to again perform HSB test, which results in a major going back of the manufacturing process.

A method of evaluating environment resistance property of stress loaded material is disclosed in Patent Document 1 for example. According to the method, environment resistance properties of materials are evaluated in a state a plurality of specimens are kept under bending stress in an equipment for testing environment resistance of stress loaded material. The equipment for performing the evaluation is comprised of jigs for exerting bending loads to the specimens, a vessel for accommodating the jigs therein, a pseudo environment reproducing apparatus capable of adjusting temperature, pressure, and composition of the atmosphere in the vessel, and a loading device for applying load to the jigs.

Further, in Patent Document 2 is disclosed a blade vibration measuring method for measuring vibration of a turbine blade having a connecting construction of the blade such as a shroud at the tip of the blade and a connecting construction, which connect adjacent blade each other by seal pins, which are pushed into seal pin grooves by centrifugal force in a part of longitudinal direction. The method comprises a first process for securing the blade root portion in a certain condition by applying the jig for securing the serration (blade root portion), a second process for restricting the blade with the certain restricting force applying device including a jig for securing the shroud by both sides at substantival same force, a jig for pushing and securing the seal pins into the seal pin grooves by a force corresponding to centrifugal force (the force toward to the tip of the longitudinal direction of the blade), mechanisms for applying the load to these jigs and a detecting device to detect the load, and a third process for measuring vibration of all over the blade.

However, the method of evaluating environment resistance property of stress loaded material of the Patent Document 1 is a method to evaluate environment resistance of a material kept under prescribed bending stress, and it can't be applied to the test to discover internal defects, which is due to the centrifugal stress, in the interface portion at the weld overlaid portion 58 of stellite or the like on the matrix of the blade profile part 60 and shroud 52 of the turbine blade 50.

Then, in the blade vibration measuring method of the Patent Document 2, the blade is secured by applying the jig for securing the blade root of the blade, the jig for securing the shroud and jigs for pushing and securing the seal pins into the seal pin grooves by a force corresponding to centrifugal force. However, the method of the Patent Document 2 is for measuring the vibration of the blade, and it can not be applied to discover internal defects in the interface portion at the weld-overlaid portion 58 of stellite or the like on the matrix of the blade profile part 60 and shroud 52 of the turbine blade 50 same as the method of Patent document 1.

### Related Art Document

### Patent Document

[Patent Document 1] Japanese Laid-Open Patent Application No.10-185798
[Patent Document 2] Japanese Laid-Open Patent Application No.2-297037

### Summary of the Invention

Therefore, the object of the invention is to provide a method and device with which centrifugal stress in the weld overlay of stellite or the like on the border portion between the tip of blade profile part and the shroud of the turbine blade without the need of providing a large vacuum room and vacuum pump of large capacity and also without requiring long time to vacuumize the room.

To attain the object, the present invention proposes a method of implementing simulated test of centrifugal stress in a turbine blade which has a shroud on a tip of the turbine blade and a blade root on the attaching side to a turbine rotor with weld-overlaid portion on the border portion between the shroud and the tip of blade profile part of the turbine blade for the purpose of simulating influence of centrifugal force on the weld-overlaid portion by using a test device, the method comprising;
applying a resultant pressing force, corresponding to centrifugal force and untwisting force of the turbine blade in operation of the turbine, to the shroud on the weld-overlaid portion side with installing the blade root of the turbine blade to the blade root retainer and applying a pressing force in the direction of centrifugal force on the blade root from outside of the blade root retainer to eliminate backlash between the blade root and blade root retainer, and retaining securely the shroud on the side opposite to the portion which is applied the pressing force,

As a device for performing the method of the invention is proposed a device for implementing simulated test of centrifugal stress in a turbine blade, which has a shroud on the tip of blade profile part of the turbine blade and a blade root on the attaching side to a turbine rotor with weld-overlaid portion on the border portion between the shroud and the blade profile part for the purpose of simulating influence of centrifugal stress on the weld-overlaid portion, the test device comprising;
a blade root retainer, in which said blade root is installed,
a first hydraulic device for applying a pressing force in the direction of centrifugal force on the blade root from outside of the blade root
retainer to eliminate backlash between the blade root and blade root retainer, a second hydraulic device applying a resultant pressing force, corresponding to centrifugal force and untwisting force of the turbine blade in operation, to the shroud on the weld-overlaid portion side, a first retaining device for retaining securely the shroud on the side opposite to the portion which is applied the pressing force, and a first and second column supports extending parallel to the longitudinal direction of the turbine blade, which is installed on the blade root retainer, with said second hydraulic device and first retaining device attached respectively to each of the column supports, whereby stress created in the weld overlaid portion in operation of the steam turbine is simulated.

In this manner, by applying resultant pressing force corresponding to centrifugal force and untwisting force exerting on the turbine blade in operation to the shroud and retaining securely the opposite side of the shroud in a state the root of the turbine blade is attached to the blade root retainer and the bottom of the root is pushed in the direction of centrifugal force to eliminate backlash, the pressing force exactly simulating the untwisting force and centrifugal force exerting on the weld-overlaid portion on the border portion between the shroud and the blade profile part in operation can be applied. Therefore, situation of the stress created in the weld-overlaid portion of material, which is high in erosion resistance but low in toughness such as stellite, is simulated with high accuracy by a static method and with a single turbine blade.

With the method and device of the invention, the simulated test can be performed in a simple way without the need for preparing a large vacuum room and vacuum pump of large capacity, and furthermore without the need to take a long time to vacuumize the large vacuum room as needed in conventional HSB test. By performing ultrasonic testing or the like of the weld overlaid portion of the blade after the simulated test, internal defects in the interface portion of the weld overlaid portion can be detected with ease and accuracy.

By forming the weld-overlay on the working fluid entrance side, applying resultant pressing force corresponding to centrifugal force and untwisting force of the turbine blade in operation to said working fluid entrance side of the shroud, and retaining securely the working fluid exit side contact tongue of the shroud, for that purpose, disposing the first retaining device at the working fluid exit side of the shroud ant disposing the second hydraulic device at the working fluid entrance side of the shroud such that it pushes the shroud in direction of force of centrifugal force and untwisting force the turbine blade exerting on the shroud in operation, stress created in the weld-overlaid portion can be simulated.
That is, with the device of simple construction, stress created in the weld overlaid portion of the turbine blade can be simulated by applying oil pressure force on the bottom of the blade root by means of the first hydraulic device to simulate the state that the backlash between the blade root and a blade groove of the turbine rotor is eliminated by the centrifugal force exerting on the turbine blade in operation of the turbine, then retaining securely the working fluid exit side(trailing edge side) contact portion of the shroud by the first retaining device, and then pushing the working fluid entrance side(leading edge side) contact portion of the shroud by the resultant pressing force corresponding to centrifugal force and untwisting force exerting on the weld-overlaid portion of the shroud in operation.

In the case a turbine blade having a stub formed on both of the suction and pressure side at an longitudinal intermediate part of the turbine blade so that the stubs of adjacent blades come in contact with each other untwisted by untwisting force exerting on the blade in operation, it is preferable that second retaining devices for securely retaining the stubs are attached to the first and second column supports respectively so that accuracy of the method and device for implementing simulated test of centrifugal stress in turbine blade can be improved.

As has been described heretofore, with the method and device to implement simulated test of centrifugal stress in turbine blade, internal defects which may be present in the interface portion of each material at the weld overlaid portion of erosion resistant material on the border portion of the blade profile part and shroud can be detected by simulating the stress created in the -overlaid portion in operation for each individual turbine blade by static method. Therefore, the simulated test can be performed efficiently and with high accuracy without the need for preparing a large vacuum room and vacuum pump of large capacity and furthermore without the need to take a long time to vacuumize the large vacuum room as needed in conventional HSB test.

### Brief Description of the Drawings

FIG. 1 is a schematic side elevation of the simulated test device of centrifugal stress in turbine blade according to the invention.
FIG. 2A is a schematic plan view of the simulated test device of centrifugal stress in turbine blade according to the invention, and FIG. 2B is a view viewed in the direction of arrows A-A' in FIG. 1.
FIG.3A to 3D are representations of an example of turbine blade having a weld overlaid portion, in which FIG.3A is a perspective front side elevation, FIG.3B is a side elevation, FIG.3C is a top view, and FIG.3D is a perspective view to show the weld overlaid portion 124.
FIG.4 is a representation of stress distribution in the weld overlaid portion 124 obtained by FEM (Finite Element Method) analysis.
FIG.5A is a perspective view of an example of long-length turbine blade, FIG.5B and FIG.5C is respectively an illustration showing a state that shrouds 52 and stubs 54 of adjacent blades 50 are brought into contact by untwisting force in operation of the turbine, and FIG.5D and FIG.5E is respectively an illustration showing a state that all the blades of a turbine rotor are brought into contact at the shroud s 52 and stubs 54 thereof by the untwisting moment in operation.

### Detailed Description of the Preferred Embodiments

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

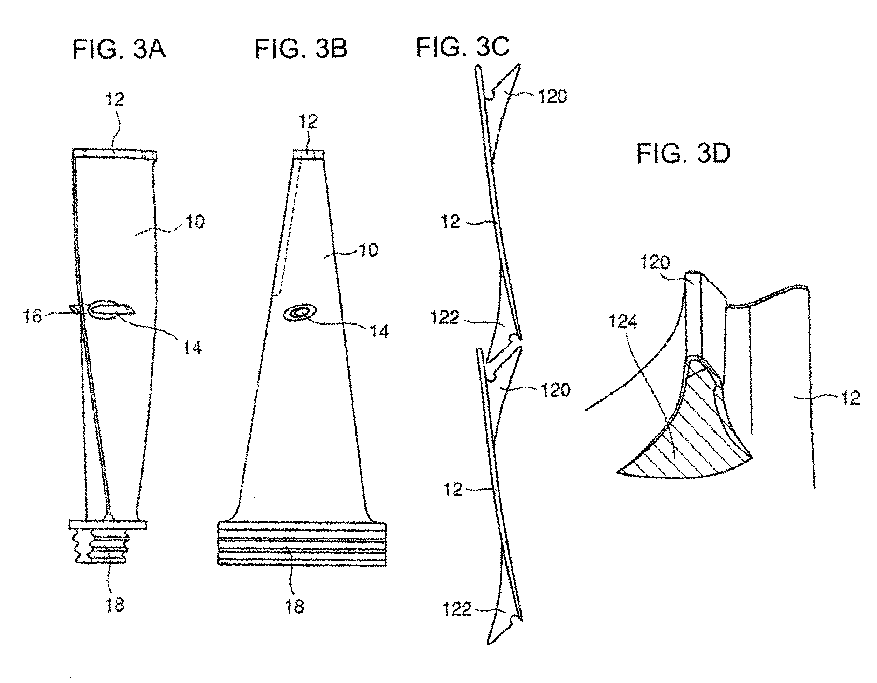

FIGS.3 are representations of an example of turbine blade to be carried out the present invention of the method for implementing simulated test of centrifugal stress in turbine blade, in which FIG.3A is a perspective view, FIG.3B is a side view, FIG.3C is a top view, and FIG.3D is a perspective view to show the weld overlaid portion 124.

Referring to FIGS.3, a turbine blade 10 has a shroud 12 on the tip of the blade profile part of the turbine blade, a blade root 18 on the attaching side to a turbine rotor not shown in the drawing, and stubs 14, 16 on the middle position in longitudinal direction of the turbine blade. The blade root (serration) 18 is formed in triangle shape and having a serration on the side thereof. A blade groove corresponding the shape of blade root 18 is formed on a turbine rotor not shown in the drawing. Installing the blade root in to the blade groove, it is possible to prevent the turbine blade 10 to go away from the blade groove due to the centrifugal force. The turbine blade 10 is twisted from the root 18 as can be seen in FIG.3A, 3B, or can be seen more clearly in FIG.5A.

In the shroud 12 applied on each turbine blade 10, as shown in FIG.3C, a contact portion 120 and 122 of each turbine blade 10 contact each other by untwisting force caused in the operation of steam turbine and all around of the shroud contact each other to form a kind of blade group connected in a ring shape. This is the same as to the stubs. Weld-overlaying is performed at steam, as working fluid, inlet side as indicated by reference numeral 124 in FIG.3D to prevent to be eroded by erosion as mentioned before.

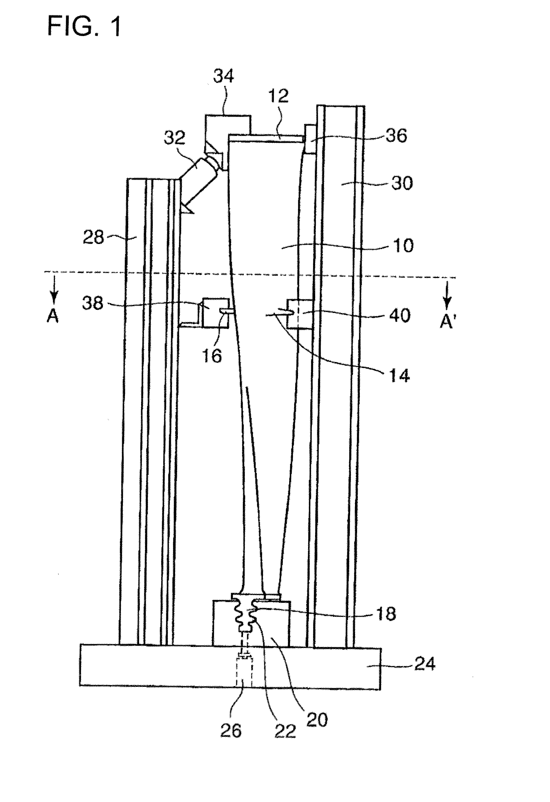

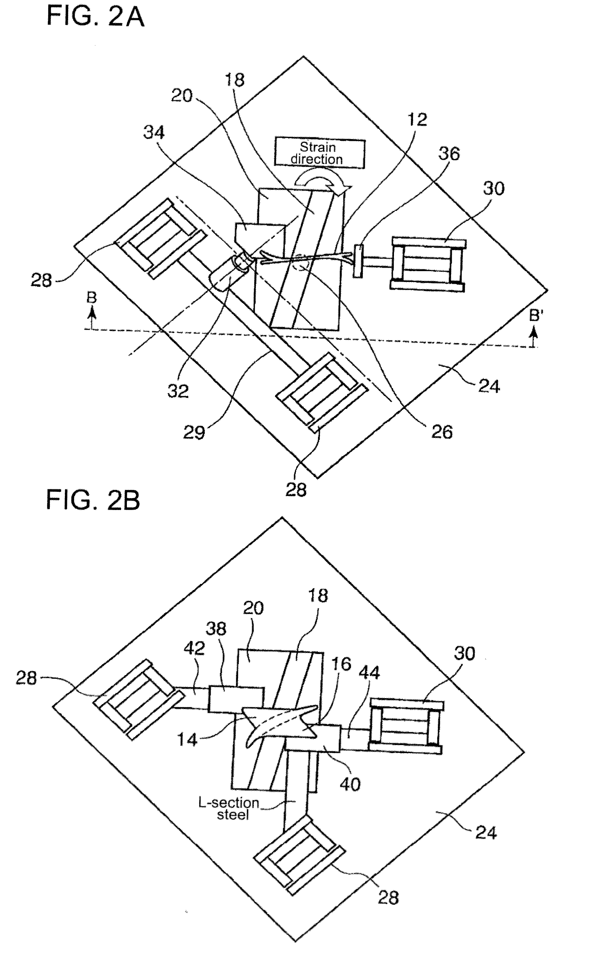

An example of simulated test device for simulating centrifugal stress in the weld overlaid portion 124 of the turbine blade 10 as mentioned above is shown in FIG.1 which is a schematic side view, FIG. 2A and FIG. 2B which are schematic plan view. FIG.1 is a side view viewed in the direction of arrows B-B' in FIG.2A. FIG.2A is a schematic plan view to show the retaining device of turbine blade, and FIG.2B is a plan view viewed in the direction of arrows A-A' in FIG.1 to show retaining construction of the stubs 14 and 16 on the turbine blade. In FIG.1 and FIG.2A and 2B, reference numeral 10 is a turbine blade explained in FIGS.3A-E, 12 is the shroud, 14 and 16 is the stub, 18 is the blade root, 20 is a blade root retainer for fixing the blade root 18, 22 is a blade groove of the root 18, 24 is a base platform of the device and the turbine blade 10 is installed on the blade root retainer 20. The blade groove 22 has a serration corresponding the serration formed on the side of blade root 18. Oil pressure is applied to the bottom face of the installed blade root 18 through a hose 26 from a hydraulic device (the first hydraulic device) not shown in the drawings, The oil pressure exerts to push the blade root 18 upward, that is, in direction of centrifugal force to be exerted to the turbine blade 10 so that the backlash between the blade root 18 and the blade root retainer 20 is eliminated,

Two column supports 28 and a column support 30 made of H-section steel and so on are provided in parallel to the turbine blade 10. A cross beam 29 is provided on the two column supports 28. A hydraulic device (the second hydraulic device) 32 having a shroud holder 34 is provided on the cross beam 29, the shroud holder 34 having a face to contact the contact portion 120 of the shroud 12 When pushed by the second hydraulic device 32. A shroud retaining device (the first retaining device)36 is provided on the column support 30 to retain the opposite side of the shroud 12 when pushed by the second hydraulic device 32. Reference numeral 38 and 40 in FIG.2B is respectively a stub retaining device (the second retaining device) for restraining the stub 14 and 16 of the turbine blade 10. The retaining device 38 and 40 is attached to the column support 28 and 30 by means of a L-section steel 42 and 44 respectively.

The shroud retaining device (the first retaining device)36 and stub retaining devices(the second retaining devices)38, 40 are provided with bolts which can be brought into contact, for example, with the shroud 12, stub 14, and stub 16 from three directions respectively so that, even when the shroud 12, stub 14, and stub 16 are positioned deviated in some degree from the right position, the shroud 12, stub 14, and stub 16 can be retained by adjusting screwing of the bolts to allow to contact each other.

First, the blade root 18 of the turbine blade 10 is installed into the blade root retainer 20, the blade root 18 is applied the force in the direction of centrifugal force (upward in FIG.1) through the hole 26 by means of a hydraulic device not shown in the drawings eliminating the backlash between the blade root 18 and blade root retainer. Then the opposite side of pushed side in the shroud 12, i.e. the contacting portion 122 (see FIG.3C), is retained by the shroud retaining device (the first retaining device) 36 (see FIG.1 and FIG.2A). Further, stubs 14 and 16 are retained with the stub retaining devices (second retaining devices) 38 and 40 respectively as shown in FIG.1 and FIG.2B.

After the blade root 18 is fixed securely to the blade root retainer 20 by eliminating the backlash between them, the contact tongue the opposite side of pushed side in the shroud 12 and the stubs 14 and 16 are contacted to the (leading edge side) contact portion 120 of the shroud 12 shown in FIG. 3C and the contact portion 120 is pushed by means of the second hydraulic device 32 with such a resultant pressing force that corresponds to centrifugal force and untwisting force that exerts on the shroud in operation.

Then, the force corresponding to the centrifugal force and untwisting force of the turbine blade 10 in the operation are exerted on the contact portion 120 of the shroud 12, and the turbine blade 10 is exerted by the untwisting deforming force in the direction as "strain direction" shown in FIG.2A. Therefore, stress corresponding to the untwisting deforming force exerted in the turbine blade 10 and centrifugal force exerted in the contact portion of the shroud 12 is created in the weld overlaid portion 124 shown in FIG.3D. Thus, simulated test of centrifugal stress of turbine blade can be implemented for each individual turbine blade easily with high accuracy same as the HSB test carried out by installing the turbine blade on the steam turbine rotor.

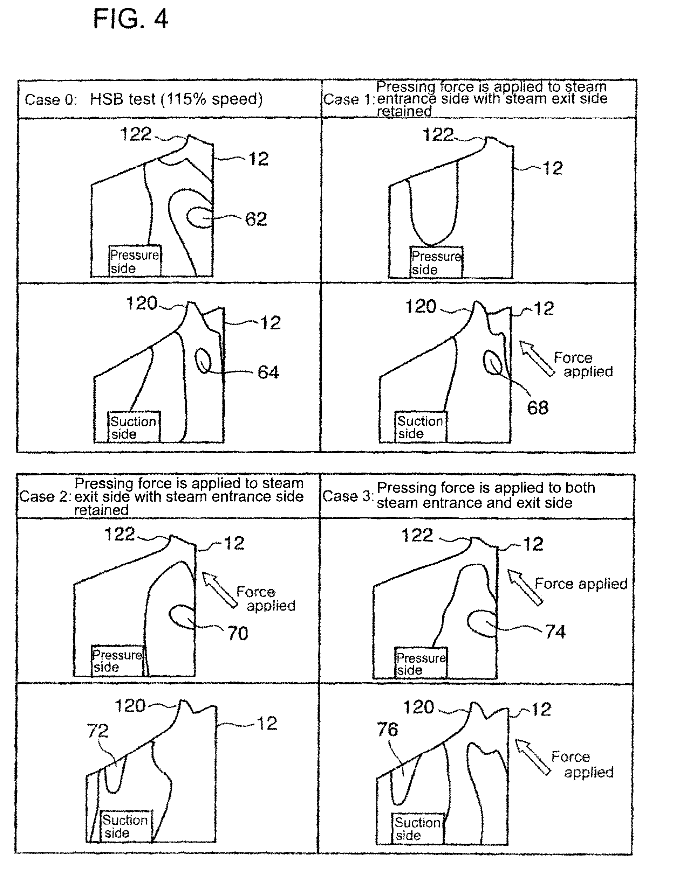

FIG.4 is a representations of stress distribution in the weld overlay 124(see FIG.3D) on the border portion between the tip of the blade profile part and the shroud 12 of the turbine blade 10 obtained by FEM(Finite Element Method) analysis, Case 0 is a result of simulation in the case of a HSB test, i.e. the case of the stress created in the shroud 12 by the centrifugal force, case 1 is a result in the case the pressing force is applied to the steam, as working fluid, entrance side (contact portion 120 side which is formed in the blade suction side as shown in FIG.3C), and the exit side (contact portion 122 side which is formed in the blade pressure side as shown in FIG.3C) is retained, case 2 is a result in the case the steam entrance side (suction side) is retained and the pressing force is applied to the exit side (pressure side), and case 3 is a result in the case the pressing force is applied to both the steam entrance side (suction side) and exit (pressure side)side.

The simulation result in the case 0 which is the case of HSB test, centrifugal force exerts on the shroud evenly and the highest stress occurred in region 62 on the blade pressure side and in region 64 on the blade suction side. In the case 1 which is the case the pressing force is applied to the steam entrance side and exit side is retained, there occurred no high stress occurred on the blade pressure side and high stress occurred on the blade suction side from in region 68 to the direction of contact portion 120 in the shroud 12 which is a shroud 12 side portion of the weld overlay 124 in FIG.3D.

In the case 2 which is the case the steam entrance side of the shroud 12 (blade suction side) is retained and the pressing force is applied to the exit side(pressure side), high stress occurred in region 70 considerably apart from the shroud 12 on the blade pressure side and in region 72 nearer to pressure side than the contact portion 120 of the shroud 12 on the blade suction side. In the case 3 which is the case the pressing force is applied to both the steam entrance side (suction side) and exit (pressure side)side, high stress occurred in region 74 on the blade pressure side and in region 76 on the blade suction side.

From these results of simulation, stress distribution at the weld-overlaid portion 124 in the shroud 12 in the case 1 which is the case the pressing force is applied to the steam entrance side (suction side) in the shroud 12 and that of exit (pressure side)side is retained is most similar to the stress distribution in the case 0 which is the case of HSB test as compared with in the case 3 which is the case the pressing force is applied to both of the steam entrance and exit side.

### Industrial Applicability

According to the invention, stress which occurs in a weld overlaid portion of the turbine blade 10 due to centrifugal can be simulated with high accuracy by a static test method for an individual turbine blade without the need of providing a large vacuum room and vacuum pump of large capacity and without requiring long time to vacuumize the vacuum room, and internal defects in the weld overlaid portion can be detected easily, as a result defect-free turbine blades can be provided.

## Claims

1. A method of implementing simulated test of centrifugal stress in a turbine blade, which has a shroud on a tip of blade profile part of the turbine blade and a blade root on the attaching side to a turbine rotor with weld-overlaid portion on the border portion between the shroud an the tip of the blade for the purpose of simulating influence of centrifugal force on the weld-overlaid portion by using a test device, the method comprising;
applying a resultant pressing force, corresponding to centrifugal force and untwisting force of the turbine blade in operation of the turbine, to the shroud on the weld-overlaid portion side with installing the blade root of the turbine blade to the blade root retainer and applying a force in the direction of centrifugal force on the blade root from outside of the blade root retainer to eliminate backlash between the blade root and blade root retainer, and retaining securely the shroud on the side opposite to the portion which is applied the pressing force.

2. A method of implementing simulated test of centrifugal stress in a turbine blade according to claim 1, wherein said weld-overlaid portion is formed on the working fluid entrance side, said resultant pressing force corresponding to centrifugal force and untwisting force of the turbine blade in operation of the turbine is applied to said working fluid entrance side of the shroud, and the working fluid exit side of the shroud is retained securely.

3. A method of implementing simulated test of centrifugal stress in a turbine blade according to claim 2, wherein said turbine blade has stubs formed on both sides at a longitudinal intermediate part of the blade, each stub being brought into contact with a stub of adjacent blade by untwisting force exerting on the turbine blades in operation of the turbine, and said pressing force is applied to the shroud in a state said stubs are retained securely.

4. A device for implementing simulated test of centrifugal stress in a turbine blade, which has a shroud on the tip of the blade profile part of the turbine blade and a blade root on the attaching side to a turbine rotor with weld-overlaid portion on the border portion between the shroud and the tip of the blade profile part of the turbine blade for the purpose of simulating influence of centrifugal stress on the weld-overlaid portion,, the test device comprising;
a blade root retainer, in which said blade root is installed,
a first hydraulic device for applying a force in direction of centrifugal pressing force on the blade root from outside of the blade root retainer to eliminate backlash between the blade root and blade root retainer,
a second hydraulic device for applying resultant pressing force corresponding to centrifugal force and untwisting force of the turbine blade in operation, to the shroud on the weld-overlaid portion side,
a first retaining device for retaining securely the shroud on the side opposite to the portion which is applied the pressing force, and
a first and second column supports extending parallel to the longitudinal direction of the turbine blade, which is installed on the blade root retainer, with said second hydraulic device and first retaining device attached respectively to each of the column supports, whereby stress created in the weld overlaid portion in operation of the steam turbine is simulated.

5. A device for implementing simulated test of centrifugal stress in a turbine blade according to claim 4, wherein said weld-overlaid portion is formed on the working fluid entrance side, said first retaining device is disposed at the working fluid exit side of the shroud, said second hydraulic device is disposed at the working fluid entrance side of the shroud such that it pushes the shroud in direction of force of centrifugal force and untwisting force of the turbine blade.

6. A device for implementing simulated test of centrifugal stress in a turbine blade according to claim 5, wherein said turbine blade has stubs formed on both sides at a longitudinal intermediate part of the blade, each stub being brought into contact with a stub of adjacent blade by untwisting force in the operation, and second retaining devices for securely retaining the stubs are attached to the first and second column supports respectively
